# EUROPEAN PATENT SPECIFICATION

(11) **EP 0 866 614 B1**
(45) Date of publication and mention of the grant of the patent: **03.07.2002**
(21) Application number: 98301897.9
(22) Date of filing: 13.03.1998
(51) Int. Cl.: H04N 7/16, H04N 7/173

(54) **Method and apparatus for transmitting data**
Verfahren und Gerät zur Datenübertragung
Méthode et appareil pour la transmission de données

(30) Priority: 20.03.1997 GB 9705719
(43) Date of publication of application: 23.09.1998
(73) Proprietor: Two Way TV Limited, Avonmore Road, London W14 8TS (GB)
(72) Inventor: Weston, David Robert, Chinnor, Oxfordshire, OX9 4BX (GB); Malaure, Jason Robert, Chinnor, Oxfordshire, OX9 2AE (GB)
(74) Representative: Skone James, Robert Edmund

(56) References cited:
- WO-A-94/14284
- US-A- 5 051 822

## Description

The invention relates to a method and apparatus for transmitting data relating to a number of different categories, from a central location to at least one remote receiver.

In a data transmission environment, it is common to need to transmit different categories of data between a transmitter and one or more receivers. Where this data is generated independently, some form of control must be implemented to optimise the use of the transmission medium and the available bandwidth. Conventionally, data in different categories is allocated a priority relating to the degree of importance of the data so that high priority data will be transmitted in preference to low priority data. However, in some cases, problems arise where data which is normally allocated a relatively low priority needs to be transmitted in preference to higher priority data.

An example where this problem can arise concerns a service broadcast system in which a variety of services are provided from a central location to a number of remote units. Each service will be allocated a priority which defines its importance relative to other services but in the case of game playing services, for example, there may be occasions on which data relating to one particular game must be supplied in preference to data relating to another service even though the game data normally has a lower priority.

WO-A-94/14284 discloses a reprogrammable terminal and a central network controller which is able to respond to the immediate need of a set top terminal by modifying a program control information signal received from an operations centre. Thus, the network controller responds to individual requirements of remote units. This, however, is not relevant to the problem which the present invention addresses, namely handling the transmission of data centrally where the data is included in different categories with different priorities.

In accordance with one aspect of the present invention, a method of transmitting data relating to a number of different categories, from a central location to at least one remote receiver, the method comprising allocating a priority to the data to be transmitted in accordance with its category, the priorities defining a relationship between the different categories of the data; transmitting the data in a manner determined by the allocated priorities; monitoring the data to be transmitted to determine whether the data will be transmitted within a satisfactory predetermined time period; and, if necessary, changing the priority of any data which has not yet been transmitted so that it will be transmitted within the said time period.

In accordance with a second aspect of the present invention, apparatus for transmitting data relating to a number of different categories, from a central location to at least one remote receiver, the apparatus comprising a processing system for allocating a priority to the data to be transmitted in accordance with its category, the priorities defining a relationship between the different categories of the data; and means for transmitting the data in a manner determined by the allocated priorities, the processing system being adapted to monitor the data to be transmitted and to determine whether the data will be transmitted within a satisfactory predetermined time period, and if necessary, to change the priority of any data which has not been transmitted so that it will be transmitted within the said time period.

With this invention, the data to be transmitted is monitored to determine whether or not the data can be transmitted in a satisfactory manner. If it cannot then the priority of that data is changed to enable satisfactory transmission.

Typically, each category of data will need to be transmitted within a certain time period of its generation or supply to the transmitting means and the monitoring step determines whether or not the data will be transmitted within that time. For example, the processing system may allocate a maximum time by which particular data must be transmitted and these times may vary depending on the data concerned.

If the monitoring step determines that the data will not be transmitted in a satisfactory manner then there are a number of different ways in which this can be dealt with. In one case, the priority can be changed to a higher priority but in other cases, the priority could be changed to one which requires that the data is compressed prior to transmission. This latter approach will result in the need to transmit less data with the result that the data will be transmitted more quickly than would otherwise be the case.

In order further to optimise the use of the available bandwidth in the transmission medium, where the data is transmitted in packets, each packet containing data of different categories, the method may further comprise monitoring a packet to be sent and if space remains in such a packet, the space being insufficient to accommodate data allocated a relatively high priority, incorporating lower priority data into the space prior to transmission. This allows background trickle feeds of operating systems and upgrades to be transmitted in an optimum manner even though these are normally allocated a relatively low priority.

It will be appreciated that there are a vast number of different categories of data which could be processed using the method. The applicants are particularly concerned with methods in which some of the categories are chosen from background game playing data, real time game playing data, receiver maintenance information, and receiver enablement/disablement instructions. These categories find particular use in the provision of interactive games, for example associated with TV broadcasts.

An example of an interactive broadcast system incorporating apparatus for carrying out a method according to the invention will now be described with reference to the accompanying drawings, in which:-
Figure 1 is a schematic block diagram of the system showing the central broadcast generator and a single information handling unit;
Figure 2 is a block diagram showing part of the central controller shown in Figure 1; and,
Figure 3 is a flow diagram illustrating operation of the processor shown in Figure 2.

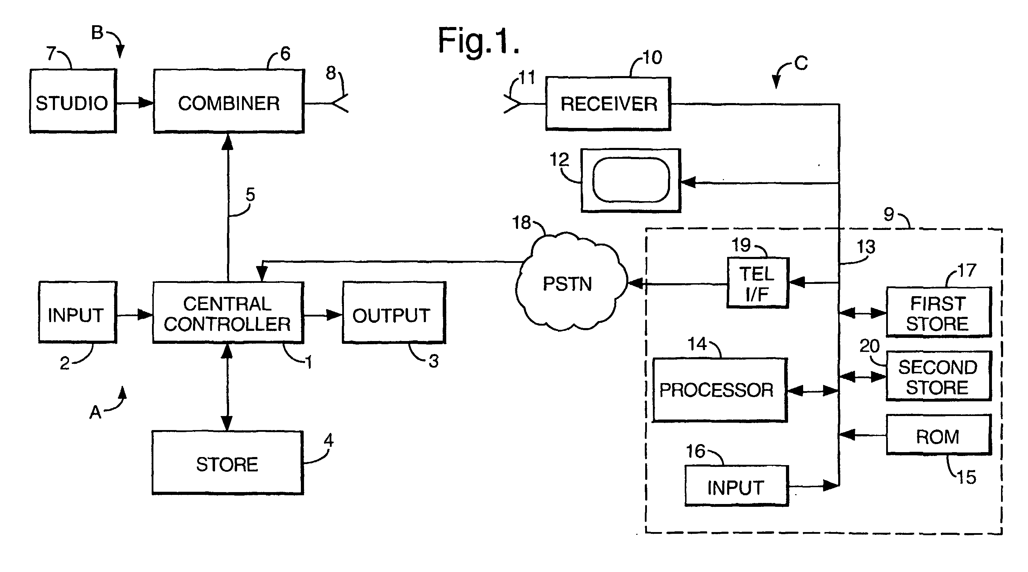

The interactive broadcast network shown in Figure 1 comprises a game control system A including a central controller 1 which will include a computer such as a PC operating a Windows based system, connected to an input device 2 such as a keyboard and/or mouse and the like and to an output device 3 which may include a monitor and/or printer. A store 4 stores data relating to service functions and remote users, which can be accessed and amended by the central controller 1. The central controller 1 generates TV display signals and other control signals associated with various service functions on a land line 5 connected to a combining unit 6 of a TV broadcast system B. The combining unit 6 receives television broadcast signals from a studio 7 which, in the case of a live event, will have originated from outside broadcast cameras, and combines these with the signals on the line 5 so that they are transmitted simultaneously by a transmitter 8 to remote users or players C. The users will typically be remote not only from the system B but also from each other.

The signals supplied to the combiner 6 may be transmitted to the remote units within a vertical blanking interval (VBI) of the normal TV signal or on a separate radio FM-SCA channel or other data format such as a cable modem.

Other forms of transmission including satellite, cable and the internet may also be used to send signals to the remote user C.

Each remote user C, only one shown in Figure 1, has a home or remote unit 9 connected to a television receiver 10 having an aerial 11 and a monitor 12. The home unit 9 includes an address/data bus 13 connected to the receiver 10, the bus 13 being connected to a microprocessor 14, a ROM 15 storing programme instructions for the processor 14, an input device 16 such as a keyboard or mouse, a first store (RAM) 17 for storing data supplied from the central controller 1, and a second signal store (RAM) 20 for storing data defining the identity of the remote unit 9 and the services to which the remote user has subscribed. Signals transmitted by the processor 14 can be communicated to the central controller 1 via a public switched telephone network 18 which is selectively accessed by a telephone interface unit 19 connected to the bus 13. Other media may be used for the return transmission including TV broadcast, cable, satellite and the internet. In general the return signal medium will be different from the medium used to transmit to the remote user C.

The game control system A can generate data relating to a variety of games some of which may be associated with television broadcasts from the studio 7. For example, one game may allow remote users to predict the occurrence of certain events in a live event being broadcast, such as a live football match. In addition, the game control system A can generate signals to individual or groups of remote units which include data such as operating system upgrades and signals for enabling or disabling certain services. As explained above, in general, each type of service category is allocated a particular priority and this is used to determine the order in which the data is transmitted. Thus, operating system upgrades and enablement/disablement instructions may have a relatively low priority while live game information will have a high priority.

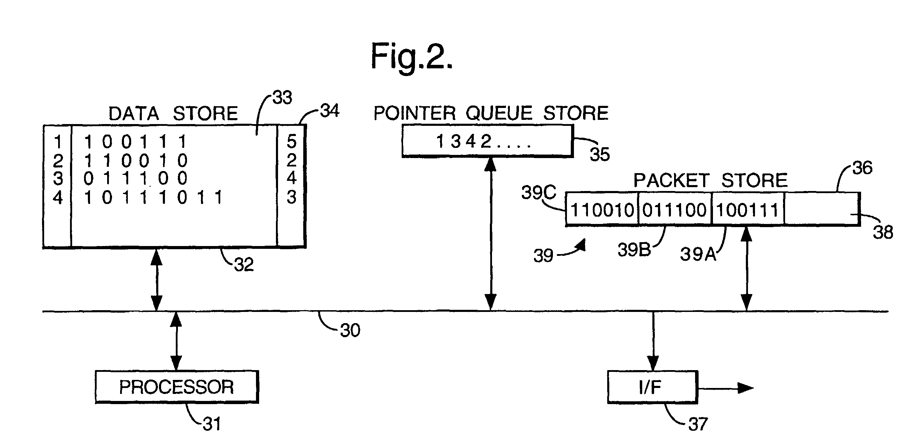

The manner in which data is handled within the central controller 1 can be seen in more detail in Figure 2. As shown in Figure 2, the central controller 1 includes an address/data bus 30 to which is connected a microprocessor 31 and a data store 32. Data to be transmitted is obtained by the processor 31 in response to input instructions from the central operator via the input device 2 and from the store 4 and is supplied and stored in the data store 32. A very simple structure for the data store is shown in Figure 2 with each line corresponding to an individual address, the addresses being labelled on the left hand side 1,2,3 etc. The store 32 has a data section 33 and a priority section 34 in which is stored a priority value for the data at the corresponding address. Thus, in this example, the data at address 1 has priority 5, the data at address 2 has priority 2, and so on.

A pointer queue store 35 is provided in which the addresses of the data in the store 32 are stored in priority order. Thus, address 1 is stored first since the data at this address has the highest priority followed by address 3, address 4, etc.

Finally, a packet store 36 is connected to the bus 30 within which a data packet is built up by the microprocessor 31 as will be described below. Once the packet is complete, the processor 31 will cause it to be transmitted via an interface 37 to the combining unit 6 for transmission.

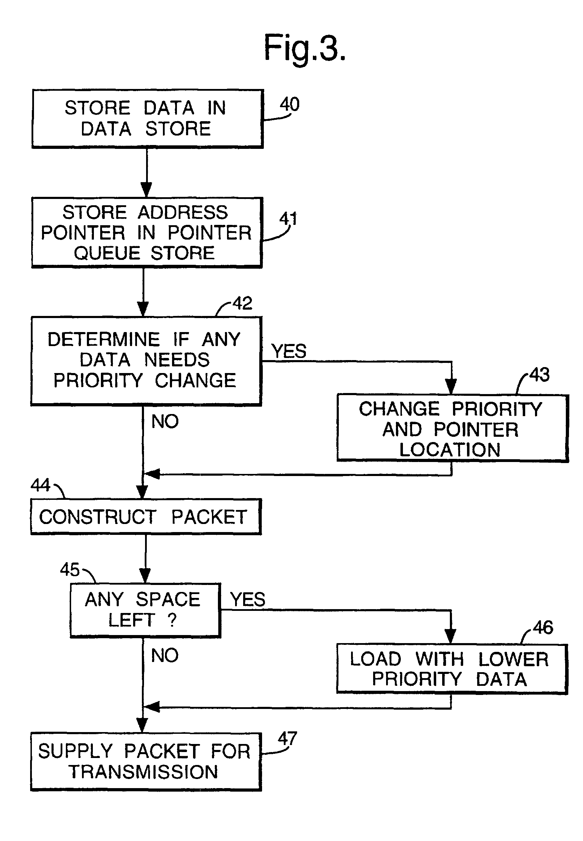

The operation of the processor 31 when building up a data packet for transmission will now be described with reference to the flow diagram shown in Figure 3. As shown at step 40, the microprocessor 31 will store incoming data in successive addresses within the store 33 and will also insert the address of the latest received data in the appropriate position in the pointer queue store 35 depending upon its priority (step 41). Each set of data will have, in addition to its priority, a certain time by which it needs to be received by the remote unit. The processor 31 monitors this time and determines regularly whether or not the data will be transmitted by that due time in accordance with its position within the pointer queue store (step 42). As the due time approaches for any particular set of data, the microprocessor 31 will increase the priority of that data to ensure that the due time is met (step 43) and correspondingly adjust the content of the pointer queue store 35.

At regular intervals, the microprocessor 31 will also build up a data packet for transmission in the store 36 (step 44). Each data packet will include a header portion 38 which includes data defining the identity or identities of remote units which are to receive the data packet, by including their identities as stored in their stores 20, or defining particular services to which the subsequent data in the packet relates. In a data storage section 39, the microprocessor 31 transfers data from the data store 32 in a sequence corresponding to the sequence of addresses in the pointer queue store 35 and hence in priority order. In this example, the data at addresses 1 and 3 has been stored at locations 39A and 39B. However, in this case, the remaining space in the packet is too small (step 45) to accommodate the data at address 4 which would normally occur next. In order to optimise the use of the packet, the microprocessor 31 has therefore transferred (step 46) data at address 2 into location 39C. Once the packet has been made up, the data in the packet is transferred via the interface 37 to the combining unit 6 for transmission (step 47).

In some cases, one or more of the priority levels allocated to the data may also cause the microprocessor 31 to compress the data so that compressed data is transferred into the packet store 36 which will therefore take up less space and be transmitted more quickly.

## Claims

1. A method of transmitting data relating to a number of different categories, from a central location (A) to at least one remote receiver (C), the method comprising allocating a priority to the data to be transmitted in accordance with its category, the priorities defining a relationship between the different categories of the data; transmitting the data in a manner determined by the allocated priorities; monitoring the data to be transmitted to determine whether the data will be transmitted within a satisfactory predetermined time period; and, if necessary, changing the priority of any data which has not yet been transmitted so that it will be transmitted within the said time period.

2. A method according to claim 1, wherein the data is transmitted in an order determined in accordance with the priorities allocated.

3. A method according to claim 1 or claim 2, further comprising, prior to transmission, compressing the data in a category if a certain priority has been allocated.

4. A method according to any of the preceding claims, wherein the data is transmitted in packets, each packet containing data of different categories, the method further comprising monitoring a packet to be sent and if space remains in such a packet, the space being insufficient to accommodate data allocated a relatively high priority, incorporating lower priority data into the space prior to transmission.

5. A method according to any of the preceding claims, wherein at least some of the categories are chosen from background game playing data, real time game playing data, receiver maintenance information, and receiver enablement/disablement instructions.

6. A method according to any of the preceding claims, wherein the data is transmitted in conjunction with a TV broadcast signal.

7. A method of providing services in conjunction with a TV broadcast system, the method comprising transmitting data relating to a number of different categories of service in conjunction with a TV broadcast signal to a number of remote receivers using a method according to any of the preceding claims.

8. A method according to claim 7, wherein at least one of the service categories is an interactive service.

9. Apparatus for transmitting data relating to a number of different categories, from a central location (A) to at least one remote receiver (C), the apparatus comprising a processing system (1) for allocating a priority to the data to be transmitted in accordance with its category, the priorities defining a relationship between the different categories of the data; and means (6) for transmitting the data in a manner determined by the allocated priorities, the processing system being adapted to monitor the data to be transmitted and to determine whether the data will be transmitted within a satisfactory predetermined time period, and if necessary, to change the priority of any data which has not been transmitted so that it will be transmitted within the said time period.

10. Apparatus according to claim 9, the apparatus being adapted to carry out a method according to any of claims 1 to 6.

11. Apparatus according to claim 9 or claim 10, the apparatus further comprising means (6) for combining the data with a broadcast TV signal for transmission to at least one remote receiver.

## Patentansprüche

1. Ein Verfahren zum Übermitteln von sich auf eine Anzahl verschiedener Kategorien beziehender Daten von einem zentralen Standort (A) zu mindestens einem Fern-Empfänger (C), wobei das Verfahren umfaßt:
Es wird zu den zu übermittelnden Daten in Übereinstimmung mit deren Kategorie eine Priorität zugeordnet, wobei die Prioritäten ein Verhältnis zwischen den verschiedenen Kategorien der Daten definieren;
es werden die Daten in einer Weise übermittelt, die durch die zugeordneten Prioritäten bestimmt wird;
es werden die zu übermittelnden Daten überwacht, um zu bestimmen, ob die Daten innerhalb eines zufriedenstellenden vorbestimmten Zeitraumes übermittelt werden; und
es wird, wenn nötig, die Priorität irgendwelcher Daten geändert, die noch nicht übermittelt worden sind, so daß sie innerhalb jenes Zeitraumes übermittelt werden.

2. Ein Verfahren nach Anspruch 1, wobei die Daten in einer Reihenfolge übermittelt werden, die in Übereinstimmung mit den zugeordneten Prioritäten bestimmt ist.

3. Ein Verfahren nach Anspruch 1 oder Anspruch 2, weiter umfassend das Komprimieren der Daten vor der Übermittlung in einer Kategorie, wenn eine bestimmte Priorität zugeordnet worden ist.

4. Ein Verfahren nach einem der vorhergehenden Ansprüche, wobei die Daten in Paketen übermittelt werden, wobei jedes Paket Daten verschiedener Kategorien enthält, wobei das Verfahren weiterhin umfaßt ein Überwachen eines zu sendenden Paketes und, falls in einem solchen Paket Platz verbleibt, wenn der Platz für die Unterbringung von Daten, denen eine relativ hohe Priorität zugeordnet ist, unzureichend ist, ein Einfügen von Daten niedrigerer Priorität in den Platz vor der Übermittlung.

5. Ein Verfahren nach einem der vorhergehenden Ansprüche, wobei wenigstens einige der Kategorien aus Hintergrundspiel-Spieldaten, Echtzeitspiel-Spieldaten, Empfänger-Wartungsinformationen und Empfänger-Freigabe-/Sperr-Instrudionen ausgewählt werden.

6. Ein Verfahren nach einem der vorhergehenden Ansprüche, wobei die Daten in Verbindung mit einem TV-Sendesignal übermittelt werden.

7. Ein Verfahren zur Bereitstellung von Dienstleistungen in Verbindung mit einem TV-Sendesystem, wobei das Verfahren das Übermitteln von Daten, die sich auf eine Anzahl verschiedener Kategorien von Dienstleistungen in Verbindung mit einem TV-Sendesignal beziehen, an eine Anzahl entfernter Empfänger unter Verwendung eines Verfahrens nach einem der vorhergehenden Ansprüche umfaßt.

8. Ein Verfahren nach Anspruch 7, wobei wenigstens eine der Dienstleistungskategorien ein Dialogbetrieb ist.

9. Vorrichtung zum Übermitteln von Daten, die sich auf eine Anzahl verschiedener Kategorien beziehen, von einem zentralen Standort (A) an wenigstens einen entfernten Empfänger (C), wobei die Vorrichtung umfaßt
ein Prozeßsystem (1) zum Zuordnen einer Priorität zu den zu übermittelnden Daten in Übereinstimmung mit deren Kategorie, wobei die Prioritäten ein Verhältnis zwischen den verschiedenen Kategorien der Daten definieren; und
Mittel (6) zum Übermitteln der Daten in einer Weise, die durch die zugeordneten Prioritäten bestimmt ist, wobei das Prozeßsystem ausgebildet ist, um die zu übermittelnden Daten zu überwachen und zu bestimmen, ob die Daten innerhalb eines zufriedenstellenden vorbestimmten Zeitraumes übermitteit werden und, falls nötig, die Priorität irgendwelcher Daten zu ändern, die nicht übermittelt worden sind, so daß sie innerhalb des Zeitraumes übermittelt werden.

10. Vorrichtung nach Anspruch 9, wobei sie ausgebildet ist, ein Verfahren nach einem der Ansprüche 1 bis 6 auszuführen.

11. Vorrichtung nach Anspruch 9 oder Anspruch 10, wobei die Vorrichtung weiter Mittel (6) zum Kombinieren der Daten mit einem TV-Sendesignal zur Übermittlung an wenigstens einen entfernten Empfänger umfaßt.

## Revendications

1. Procédé de transmission de données concernant un certain nombre de catégories différentes, depuis un emplacement central (A) jusqu'à au moins un récepteur distant (C), le procédé comprenant l'affectation d'une priorité aux données à transmettre en fonction de leur catégorie, les priorités définissant une relation entre les différentes catégories de données ; la transmission des données d'une manière déterminée par les priorités affectées ; la surveillance des données à transmettre pour déterminer si les données seront transmises dans une période de temps prédéterminée satisfaisante ; et, si nécessaire, le changement de la priorité de toutes les données qui n'ont pas été encore transmises, de façon à ce qu'elles soient transmises dans ladite période de temps.

2. Procédé selon la revendication 1, dans lequel les données sont transmises dans un ordre déterminé en fonction des priorités affectées.

3. Procédé selon la revendication 1 ou la revendication 2, comprenant en outre, avant transmission, la compression des données dans une catégorie si une certaine priorité a été affectée.

4. Procédé selon l'une quelconque des revendications précédentes, dans lequel les données sont transmises en paquets, chaque paquet contenant des données de différentes catégories, le procédé comprenant en outre la surveillance d'un paquet à envoyer, et si de l'espace reste dans un tel paquet, l'espace étant insuffisant pour loger des données ayant reçu une priorité relativement élevée, l'incorporation de données de priorité plus basse dans l'espace avant transmission.

5. Procédé selon l'une quelconque des revendications précédentes, dans lequel au moins certaines des catégories sont choisies parmi des données de jeux en arrière-plan, des données de jeux en temps réel, des informations de maintenance de récepteur, et des instructions d'activation/de désactivation du récepteur.

6. Procédé selon l'une quelconque des revendications précédentes, dans lequel les données sont transmises en conjonction avec un signal d'émission de télévision.

7. Procédé de fourniture de services en conjonction avec un système d'émission de télévision, le procédé comprenant la transmission de données concernant un certain nombre de catégories différentes de services en conjonction avec un signal d'émission de télévision à un certain nombre de récepteurs distants en utilisant un procédé selon l'une quelconque des revendications précédentes.

8. Procédé selon la revendication 7, dans lequel au moins une des catégories de services est un service interactif.

9. Dispositif de transmission de données concernant un certain nombre de catégories différentes, depuis un emplacement central (A) à au moins un récepteur distant (C), le dispositif comprenant un système de traitement (1) pour affecter une priorité aux données à transmettre en fonction de leur catégorie, les priorités définissant une relation entre les différentes catégories de données ; et un moyen (6) pour transmettre les données d'une manière déterminée par les priorités affectées, le système de traitement étant destiné à surveiller les données à transmettre et à déterminer si les données seront transmises dans une période de temps prédéterminée satisfaisante, et si nécessaire, à changer la priorité de toutes les données qui n'ont pas été encore transmises, de façon à ce qu'elles soient transmises dans ladite période de temps.

10. Dispositif selon la revendication 9, le dispositif étant destiné à mettre en oeuvre le procédé selon l'une quelconque des revendications 1 à 6.

11. Dispositif selon la revendication 9 ou la revendication 10, le dispositif comprenant en outre un moyen (6) pour combiner les données avec un signal de télévision d'émission pour transmission à au moins un récepteur distant.
